# DEMANDE DE BREVET EUROPEEN

(11) **EP 0 834 436 A1**
(43) Date de publication de la demande: **08.04.1998**
(21) Numéro de dépôt: 97402165.1
(22) Date de dépôt: 18.09.1997
(51) Int. Cl.: B62B 3/14, B42F 9/00

(54) **Support-papier pour tube de poignée de chariot de transport ou manutention, et tube de poignée et chariot équipés d'un tel support-papier**

(30) Priorité: 01.10.1996 FR 9611946
(71) Demandeur: ATELIERS REUNIS CADDIE, F-67301 Schiltigheim Cedex (FR)
(72) Inventeur: Joseph, Alice, 67300 Schiltigheim (FR); Le Marchand, Alain, 67116 Reichstett (FR); Schaeffer, Pascal, 67440 Singrist (FR)
(74) Mandataire: CABINET BONNET-THIRION

(57) **Abrégé**

Support-papier destiné à être monté sur le tube de poignée (3) du brancard de manoeuvre d'un chariot de transport ou manutention : le support-papier est constitué d'une pièce globalement cylindrique comportant un anneau (9) auquel est raccordé par son âme (11) un élément en forme de T dont une aile (12), dite de manoeuvre, s'étend sur toute sa longueur à distance de l'anneau (9) et dont l'autre aile (13), dite de maintien, est à une distance de la surface extérieure (14) de l'anneau (9) qui décroît depuis son extrémité par laquelle elle se raccorde à l'âme (11) et à l'aile de manoeuvre (12) jusqu'à son extrémité libre (15) dite d'appui en sorte qu'un papier peut être retenu entre ladite extrémité d'appui et l'anneau.

## Description

La présente invention a pour objet un support-papier destiné à être monté sur le tube de poignée du brancard de manoeuvre d'un chariot de transport ou manutention.

On a déjà proposé d'équiper un tel chariot d'un support-papier ; ainsi, par exemple, le document FR-A1-2 713 004 décrit un support publicitaire fixé sur le tube de poignée d'un chariot de supermarché.

Jusqu'ici, de tels supports sont réalisés par l'assemblage de plusieurs pièces et sont dès lors d'un prix de revient élevé.

La présente invention a pour but de pallier cet inconvénient.

Selon l'invention, un support-papier, destiné à être monté sur le tube de poignée du brancard de manoeuvre d'un chariot de transport ou manutention, est caractérisé par le fait qu'il est constitué d'une pièce globalement cylindrique comportant un anneau auquel est raccordé par son âme, dite charnière, un élément en forme de T dont une aile, dite de manoeuvre, s'étend sur toute sa longueur à distance de l'anneau et dont l'autre aile, dite de maintien, est à une distance de la surface extérieure de l'anneau qui décroît depuis son extrémité par laquelle elle se raccorde à l'âme et à l'aile de manoeuvre jusqu'à son extrémité libre dite d'appui en sorte qu'un papier peut être retenu entre ladite extrémité d'appui et l'anneau, ledit anneau étant adapté à recevoir le tube de poignée du chariot pour y être fixé.

Un tel support-papier, utilisable par exemple pour supporter une liste de courses effectuées dans une grande surface, est de constitution simple ; sa réalisation est simple également car la pièce étant globalement cylindrique elle peut être obtenue par découpe à longueur d'un profilé dont la section est celle de ladite pièce.

Avantageusement, l'aile de manoeuvre a une section transversale globalement constante et s'étend parallèlement à la surface extérieure de l'anneau.

De préférence, l'aile de maintien a une section transversale qui décroît depuis son extrémité, par laquelle elle est reliée à l'âme de l'élément et à l'aile de manoeuvre, vers son extrémité libre dite d'appui.

Avantageusement, l'extrémité libre d'appui de l'aile de maintien présente sur sa face tournée vers l'anneau un bourrelet d'appui et l'anneau porte à sa surface extérieure une creusure adaptée à recevoir au moins partiellement ledit bourrelet ; de préférence, l'extrémité du bourrelet qui fait face à la creusure est, au repos, à une distance du fond de la creusure qui est inférieure à la profondeur de la creusure.

Grâce à cette disposition, il n'est pas nécessaire, pour maintenir le papier, que l'extrémité libre dite d'appui soit en contact avec la surface extérieur de l'anneau : le papier est ici cintré et en appui en trois points, un point sur l'extrémité du bourrelet et deux points bordant la creusure.

Avantageusement, l'anneau est prolongé par une tablette s'étendant tangentiellement à l'anneau depuis la zone de la surface extérieure de l'anneau placée au droit de l'extrémité libre d'appui de l'aile de maintien.

Grâce à cette disposition, il est possible d'écrire sur le papier ; ainsi, selon l'exemple d'application cité ci-dessus dans lequel le papier est une liste de courses, il est possible de barrer les courses au fur et à mesure qu'elles sont effectuées.

De préférence, le support-papier est réalisé en une matière élastique.

Avantageusement, il est réalisé en caoutchouc naturel ou synthétique.

Ceci présente un avantage important sur le plan de la sécurité, lorsqu'il s'agit notamment d'un support-papier muni d'une tablette équipant un chariot pouvant recevoir un enfant à l'avant assis face à la poignée du brancard de manoeuvre.

De préférence, le support-papier est adapté à être monté à force sur le tube de poignée, la paroi intérieure cylindrique de l'anneau ayant un diamètre légèrement inférieur au diamètre extérieur du tube de poignée.

Pour obtenir un meilleur maintien du papier sur le support-papier, celui-ci peut comporter un moyen de mise en pression sollicitant l'extrémité libre de l'aile de maintien vers la surface extérieure de l'anneau ; le moyen de mise en pression peut être une plaquette insérée entre l'aile de manoeuvre et l'anneau, et solidaire de l'anneau ; la solidarisation de la plaquette et de l'anneau peut être obtenue par une vis qui, lorsque le support-papier est monté sur le tube de poignée, traverse la paroi du tube de poignée.

De préférence, l'extrémité de la plaquette est repliée et en contact avec l'aile de manoeuvre et l'âme, au droit de la jonction de celles-ci ; avantageusement, l'extrémité de la plaquette est munie d'une échancrure en sorte que son contact avec l'aile de manoeuvre et l'âme a lieu en deux zones espacées longitudinalement.

La présente invention a également pour objet un tube de poignée de brancard de manoeuvre d'un chariot de transport ou manutention équipé d'un support-papier tel que ci-dessus.

Un autre objet de l'invention est un chariot de transport ou manutention dont le brancard comporte un tel tube de poignée.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue partielle en perspective d'un chariot dont le tube de poignée porte un support-papier selon l'invention ;
- la figure 2 est une vue en coupe, à plus grande échelle, selon ll-ll de la figure 1 ;
- la figure 3 est un détail de la figure 2 à plus grande échelle ;
- la figure 4 est analogue à la figure 2 mais concerne une variante ;
- la figure 5 est une vue en perspective de la plaquette qui équipe la variante de la figure 4 ;
- la figure 6 représente le support-papier de la figure 4 dans la position qu'il occupe juste avant la mise en place du papier qu'il doit supporter ;
- la figure 7 est analogue à la figure 4 mais représente encore une autre variante ;
- la figure 8 est une vue selon la flèche VIII de la figure 7.

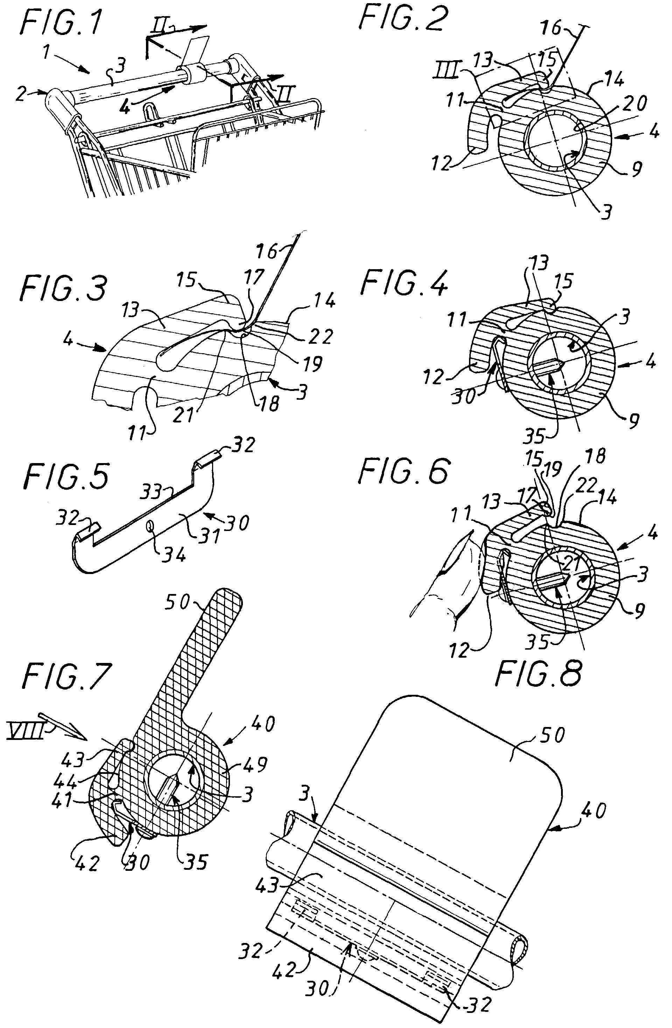

Sur la figure 1, on a représenté partiellement en perspective un chariot 1, du type de ceux qui sont utilisés dans les supermarchés ; le chariot 1 comporte un brancard de manoeuvre 2 muni d'un tube de poignée 3 qui porte un support-papier 4 selon l'invention.

Le support-papier 4, mieux visible sur la figure 2, est constitué d'une pièce globalement cylindrique comportant un anneau 9 auquel est raccordé par son âme 11 un élément en forme de T dont une aile 12, dite de manoeuvre, s'étend sur toute sa longueur à distance de l'anneau 9 tandis que l'autre aile 13, dite de maintien, est à une distance de la surface extérieure 14 de l'anneau 9 qui décroît depuis son extrémité par laquelle elle se raccorde à l'âme 12 et à l'aile de manoeuvre 12 jusqu'à son extrémité libre 15 dite d'appui, en sorte qu'un papier 16 peut être retenu entre cette extrémité d'appui 15 et l'anneau 9, dans les conditions décrites ci-après.

On aura compris que l'expression "globalement cylindrique", attachée à la pièce constituée par l'anneau 9, l'âme 11 et les ailes 12 et 13, signifie que ladite pièce est limitée par une surface cylindrique dont les génératrices sont perpendiculaires au plan de la figure 2 et dont la directrice est le contour, externe et interne, du support-papier représenté en coupe sur la figure 2.

L'aile de manoeuvre 12 a une section transversale globalement constante et s'étend parallèlement à la surface extérieure 14 de l'anneau 9.

L'aile de maintien 13 a une section transversale qui décroît depuis son extrémité, par laquelle elle est reliée à l'âme 11 et à l'aile de manoeuvre 12, vers son extrémité libre d'appui 15.

L'extrémité d'appui 15 de l'aile de maintien 13 présente sur sa face tournée vers l'anneau 9 un bourrelet 17 ; l'anneau 9 porte à sa surface extérieure 14 une creusure 18 adaptée à recevoir au moins partiellement le bourrelet 17 ; comme cela est visible sur la figure 2, l'extrémité 19, du bourrelet 17, qui fait face à la creusure 18 est, au repos, à une distance du fond de celle-ci qui est inférieure à la profondeur de la creusure 18.

Le support-papier 4 est solidarisé au tube de poignée 3 par tout moyen approprié ; ce peut être par collage, par vissage, par emmanchement à force : auquel cas la paroi intérieure 20 cylindrique de l'anneau 9 a un diamètre légèrement inférieur au diamètre extérieur du tube de poignée 3.

Le fonctionnement est le suivant. L'âme 11 étant prévue avec une épaisseur moindre que celle de l'aile de manoeuvre 12, elle fait office de charnière pour l'ensemble constitué par les ailes de manoeuvre 12 et de maintien 13 ; dès lors, une action exercée sur l'aile de manoeuvre 12 en direction du tube de poignée 3 fait légèrement basculer ledit ensemble autour de cette charnière 11 ce qui éloigne l'extrémité libre de l'aile de maintien 13 de l'anneau 9 suffisamment pour que l'extrémité 19 du bourrelet 17 quitte complètement la creusure 19 jusqu'à une distance, par rapport à l'axe du tube de poignée 3, légèrement supérieure au rayon de la paroi extérieure de l'anneau 9 ; dans cette position, il est aisé de glisser un papier, tel que le papier 16, dans la fente définie entre l'aile de maintien 13 et l'anneau 9.

Lorsque l'usager relâche sa pression sur l'aile de manoeuvre 12, l'âme 11, l'aile de manoeuvre 12 et l'aile de maintien 13 reprennent, grâce à l'élasticité de l'âme 11, leur position de repos ; le bourrelet 17, en pénétrant partiellement à l'intérieur de la creusure 18, cintre le papier 16 qui est en appui en trois points : l'extrémité 19 du bourrelet 17, d'une part, et les bords 21 et 22 de la creusure 18, d'autre part, comme cela est mieux visible sur la figure 3 ; le maintien du papier est d'autant mieux assuré que le papier 16 présente une certaine raideur et/ou que les surfaces en contact, du papier, d'une part, et du support-papier, d'autre part, assurent un certain frottement.

On comprendra qu'en choisissant les dimensions relatives des ailes de manoeuvre 12 et de maintien 13, et de l'âme 11, notamment leurs épaisseurs, il est possible de réaliser le support-papier 4 pratiquement en n'importe qu'elle matière ; le jeu existant entre le bourrelet 19 et la creusure 18 permet de réaliser le support-papier 4 de manière économique en coupant à longueur un profilé de section correspondante.

Dans la mesure où l'on souhaite avoir un maintien du papier 16 plus efficace par pincement proprement dit, on peut, par une opération de formage à chaud par exemple, faire en sorte que l'aile de maintien 13 soit, au repos, en contact sous pression avec la surface extérieure de l'anneau 9. On peut également assurer ce contact par un moyen ou pièce de mise en pression lors du montage du support-papier 4 sur le tube de poignée 3.

La figure 4 montre le support-papier 4 équipé d'un tel moyen, ici une plaquette 30, de mise en pression.

La plaquette 30, mieux visible sur la figure 5, comporte un flan 31 de forme globalement rectangulaire dont un bord est muni d'une échancrure 33 ; les parties non échancrées 32 de ce bord sont repliées pour épouser substantiellement le fond de la rainure définie entre l'anneau 9 et l'aile de manoeuvre 12 lorsque la plaquette 30 est introduite dans cette rainure, son flan 31 étant disposé tangentiellement à l'anneau 9 et les bords repliés 32 s'étendant du côté de la plaquette 30 qui fait face à l'anneau 9. Un trou 34 est prévu dans le flan 34 pour fixation de la plaquette 30.

La mise en pression de l'aile de maintien 13 s'effectue comme suit. En déplaçant par rapport à l'anneau 9, avant de la fixer, la plaquette 30, préalablement introduite dans la rainure définie ci-dessus, dans le sens horaire par rapport aux figures, les bords repliés 32 soulèvent légèrement l'aile de manoeuvre 12 et déplacent légèrement circonférentiellement l'âme 11, tout au moins la partie de celle-ci la plus éloignée de l'anneau 9 : ceci a pour conséquence un rapprochement de l'extrémité 15 de l'aile de maintien 13 vers l'anneau 9 et une mise en pression de celle-ci au contact de l'anneau 9. Cette position en pression est conservée en solidarisant alors la plaquette 30 à l'anneau 9 ; ici, ceci est obtenu par une vis 35, traversant le trou 34 et vissée dans l'anneau 9 ; de préférence, comme représenté, la vis 35 est également vissée dans la paroi du tube de poignée 3 ; sa mise en place est facilitée en choisissant une vis 35 autotaraudeuse, le tube de poignée 3 étant métallique.

L'échancrure 33 dont est munie la plaquette 30 présente l'intérêt suivant. Lorsque le matériau constitutif du support-papier est plutôt élastique, et c'est le cas notamment lorsqu'il est en caoutchouc, naturel ou synthétique, lors d'une pression au voisinage de son centre sur l'aile de manoeuvre 12, on peut profiter de la course disponible jusqu'à l'anneau 9, l'aile de manoeuvre 12 se cambrant au droit de l'échancrure 33, comme le montre la figure 6, et l'extrémité 15 de l'aile de maintien 13 est soulevée au maximum.

Les figures 7 et 8 montrent une variante dans laquelle un support-papier 40, comportant, comme dans les variantes précédentes, un anneau 49, une âme 41, et des ailes de manoeuvre 42 et de maintien 43, est muni d'un prolongement 50 constituant une tablette servant d'appui pour le papier 16 sur lequel il est alors possible d'écrire : on peut ainsi, par exemple, lorsque le papier porte une liste de courses, barrer les courses au fur et à mesure qu'elles sont effectuées. La tablette 50 s'étend tangentiellement à l'anneau 49 depuis la zone de la surface extérieure 44 de l'anneau 49 placée au droit de l'extrémité d'appui de l'aile de maintien 43 ; il est préférable, voir impératif, de réaliser un tel support-papier 40 en une matière non agressive, comme du caoutchouc naturel ou synthétique ; en effet, compte-tenu de son implantation sur le tube de poignée 3, le support-papier 40 ne doit pas être dangereux pour l'enfant éventuellement assis à l'avant du chariot 1, face au tube de poignée 3.

## Revendications

1. Support-papier constitué d'une pièce à laquelle est raccordé par son âme (11, 41), dite charnière, un élément en forme de T dont une aile (12, 42), dite de manoeuvre, s'étend sur toute sa longueur à distance de ladite pièce et dont l'autre aile (13, 43), dite de maintien, est à une distance de la surface extérieure (14) de ladite pièce qui décroît depuis son extrémité par laquelle elle se raccorde à l'âme (11, 41) et à l'aile de manoeuvre (12, 42) jusqu'à son extrémité libre (15) dite d'appui en sorte qu'un papier peut être retenu entre ladite extrémité d'appui et ladite pièce, caractérisé par le fait que ladite pièce est une pièce globalement cylindrique comportant un anneau (9, 49), ledit anneau étant adapté à recevoir le tube de poignée (3) du brancard de manoeuvre (2) d'un chariot (1) de transport ou manutention pour y être fixé.

2. Support-papier selon la revendication 1, caractérisé par le fait que l'aile de manoeuvre (12, 42) a une section transversale globalement constante et s'étend parallèlement à la surface extérieure (14) de l'anneau (9, 49).

3. Support-papier suivant l'une des revendications 1 ou 2, caractérisé par le fait que l'aile de maintien (13, 43) a une section transversale qui décroît depuis son extrémité, par laquelle elle est reliée à l'âme (11, 41) de l'élément et à l'aile de manoeuvre (12, 42), vers son extrémité libre (15) dite d'appui.

4. Support-papier suivant l'une des revendications 1 à 3, caractérisé par le fait que l'extrémité libre (15) d'appui de l'aile de maintien (13, 43) présente sur sa face tournée vers l'anneau (9, 49) un bourrelet (17) d'appui et l'anneau (9, 49) porte à sa surface extérieure (14) une creusure (18) adaptée à recevoir au moins partiellement ledit bourrelet (17).

5. Support-papier selon la revendication 4, caractérisé par le fait que l'extrémité (19) du bourrelet (17) qui fait face à la creusure (18) est, au repos, à une distance du fond de la creusure (18) qui est inférieure à la profondeur de la creusure (18).

6. Support-papier selon l'une des revendications 1 à 5, caractérisé par le fait que l'anneau (49) est prolongé par une tablette (50) s'étendant tangentiellement à l'anneau (49) depuis la zone de la surface extérieure (44) de l'anneau (49) placée au droit de l'extrémité libre d'appui de l'aile de maintien (43).

7. Support-papier selon l'une des revendications 1 à 6, caractérisé par le fait qu'il est réalisé en une matière élastique.

8. Support-papier selon la revendication 7, caractérisé par le fait qu'il est réalisé en caoutchouc naturel ou synthétique.

9. Support-papier selon l'une des revendications 1 à 8, caractérisé par le fait qu'il est adapté à être monté à force sur le tube de poignée (3), la paroi intérieure (20) cylindrique de l'anneau (9) ayant un diamètre légèrement inférieur au diamètre extérieur du tube de poignée (3).

10. Support-papier selon l'une des revendications 1 à 9, caractérisé par le fait qu'il comporte un moyen de mise en pression (30) sollicitant l'extrémité libre (15) de l'aile de maintien (13, 43) vers la surface extérieure (14, 44) de l'anneau (9, 49).

11. Support-papier selon la revendication 10, caractérisé par le fait que le moyen de mise en pression (30) est une plaquette insérée entre l'aile de manoeuvre (12, 42) et l'anneau (9, 49), et solidaire de l'anneau (9, 49).

12. Support-papier selon la revendication 11, caractérisé par le fait que la solidarisation de la plaquette (30) et de l'anneau (9, 49) est obtenue par une vis (35) qui, lorsque le support-papier (4, 40) est monté sur le tube de poignée (3), traverse la paroi du tube de poignée (3).

13. Support-papier selon l'une des revendications 11 ou 12, caractérisé par le fait que l'extrémité de la plaquette (30) est repliée (32) et en contact avec l'aile de manoeuvre (12, 42) et l'âme (11, 41), au droit de la jonction de celles-ci.

14. Support-papier selon la revendication 13, caractérisé par le fait que l'extrémité de la plaquette (30) est munie d'une échancrure (33) en sorte que son contact avec l'aile de manoeuvre (12, 42) et l'âme (11, 41) a lieu en deux zones espacées longitudinalement.

15. Tube de poignée de brancard de manoeuvre d'un chariot de transport ou manutention équipé d'un support-papier (4, 40) selon les revendications 1 à 14.

16. Chariot de transport ou manutention dont le brancard (2) comporte un tube de poignée selon la revendication 15.
